# EUROPÄISCHE PATENTSCHRIFT

(11) **EP 0 872 001 B1**
(45) Veröffentlichungstag und Bekanntmachung des Hinweises auf die Patenterteilung: **04.08.1999**
(21) Anmeldenummer: 96905755.3
(22) Anmeldetag: 23.03.1996
(51) Int. Cl.: H02B 1/36

(54) **EINSCHUBELEMENT EINER NIEDERSPANNUNGS-SCHALTANLAGE**
PLUG-IN UNIT FOR A LOW-VOLTAGE SWITCH EQUIPMENT
ELEMENT ENFICHABLE POUR INSTALLATION DE COMMUTATION BASSE TENSION

(30) Priorität: 28.03.1995 DE 19511348
(43) Veröffentlichungstag der Anmeldung: 21.10.1998
(73) Patentinhaber: Klöckner-Moeller GmbH, 53115 Bonn (DE)
(72) Erfinder: WINKLER, Johannes, D-53332 Bornheim (DE); WISSEN, Axel, D-53773 Hennef (DE)
(86) Internationale Anmeldenummer: DE9600504
(87) Internationale Veröffentlichungsnummer: WO9630981

(56) Entgegenhaltungen:
- EP-A- 0 109 584
- DE-U- 9 011 221
- DE-U- 29 505 257
- US-A- 4 180 846

## Beschreibung

Die Erfindung betrifft eine Niederspannungs-Schaltanlage zur Abgabe und/oder Verteilung elektrischer Energie, mit in einem schrankförmigen Gehäuse angeordneten Stromsammelschienen, an die mindestens ein mit wenigstens einem auf einem herausnehmbaren Einschubelement angeordneten Schaltgerät versehener Stromabnehmer angeschlossen ist, wobei die Stromsammelschienen in einem Schienenkanalsystem angeordnete Verteilschienen aufweisen, deren elektrische Verbindung zu den auf einem Einschubelement befindlichen Schaltgeräten steckbar ist, und wobei das Einschubelement eine parallel zur Rückwand des schrankförmigen Gehäuses angeordnete Montageplatte aufweist, an die ein Steckerträger zur Aufnahme von Laststromsteckern angebracht ist.
Eine derartige Niederspannungs-Schaltanlage ist aus der EP-A-0 109 584 und der WO 93/20605 bekannt. Bei dem Einschubelement gemäß der WO 93/20605 ist an einer Bodenplatte eine senkrecht dazu angeordnete Montageplatte und eine Rückwand angebracht. Die Rückwand weist zwei großzügige Öffnungen zum Durchstecken der Laststromstecker auf. Die Laststrom-stecker werden hierbei über Hilfselemente derart an der Bodenplatte befestigt, daß die jeweiligen Kontaktstücke so weit durch die Öffnungen in der Rückwand hindurchragen, daß sie zuverlässig auf entsprechende stromführende Schienen gesteckt werden können.

Bei diesem Einschubelement werden die Laststromstecker an Hilfselemente und die wiederum an der Bodenplatte verschraubt. Auch die Montageplatte und die Rückwand sind an der Bodenplatte festgeschraubt.

Ein aus derart vielen Einzelteilen bestehendes und derart viele Schraubverbindungen aufweisendes Einschubelement ist teuer in der Herstellung sowie aufwendig in der Montage und bei eventuellen Wartungs- oder Reparaturarbeiten.

Davon ausgehend liegt der vorliegenden Erfindung die Aufgabe zugrunde, eine Niederspannungs-Schaltanlage zu schaffen, die kostengünstig herzustellen und einfach zu montieren ist.

Als Lösung dieser Aufgabe wird vorgeschlagen, die Niederspannungs-Schaltanlage der eingangs genannten Art dahingehend weiterzubilden, daß der Steckerträger verschwenkbar an der Montageplatte gelagert ist.

Eine nach dieser technischen Lehre ausgeführte Niederspannungs-Schaltanlage hat den Vorteil, daß durch die verschwenkbare Anordnung des Steckerträgers eine einfache Montage des Einschubelementes und eine einfache Montage der Laststromstecker am Steckerträger möglich wird. Ein weiterer Vorteil besteht in der dadurch erreichten sehr viel kompakteren Bauweise.

Durch das Verschwenken des Steckerträgers wird der die Laststromstecker aufnehmende Bereich des Einschubelementes zu Montagezwecken besser zugänglich, da die Montageplatte den Einbau der Laststromstecker nicht länger behindert. Somit kann der bisher nur für die Montage der Laststromstecker zur Verfügung gestellte Raum im Einschubelement entfallen, so daß ein erfindungsgemäß ausgestaltetes Einschubelement eine sehr viel kompaktere Bauweise aufweist.

Des weiteren ist durch die so erreichte bessere Zugänglichkeit eine einfachere und schnellere Montage des Einschubelementes möglich.

In einer vorteilhaften Ausgestaltung ist der Steckerträger um eine horizontale Achse verschwenkbar. Hierdurch wird erreicht, daß beispielsweise bei Wartungs- oder Reparaturarbeiten das Einschubelement nur teilweise aus der Halterung herausgezogen werden braucht, denn es ist möglich, den Steckerträger noch in den dafür vorgesehenen Haltevorrichtungen zu belassen und trotzdem die Montageplatte wegzuschwenken, so daß ein Zugriff auf die Laststromsteckern möglich ist. Hierdurch wird die Wartung und/oder die Reparatur der Einschubelemente deutlich vereinfacht.

In einer anderen Ausführungsform ist der Steckerträger lösbar an der Montageplatte gelagert. Dies kann beispielsweise durch eine Steckverbindung realisiert sein. Hierdurch wird der Zusammenbau des Einschubelementes vereinfacht, da aufwendige Befestigungsmittel obsolet werden.

In einer anderen Ausführungsform wird der Steckerträger durch Befestigungsmittel wie beispielsweise Schrauben, Nieten, Rastverschlüsse oder Schnappverbindungen dauerhaft und verliersicher an der Montageplatte befestigt. Hierdurch wird gewährleistet, daß das Einschubelement auch nach längeren Transporten oder an Aufstellorten, die starken Vibrationen unterliegen, wie beispielsweise Fabrikhallen usw. noch zuverlässig zusammengehalten wird, so daß dessen Funktionstüchtigkeit gewährleistet ist.

In einer vorteilhaften Ausgestaltung weist der Steckerträger eine Aufnahmeplatte zur Aufnahme einer Anzahl von Laststromsteckern, eine an einer Unterseite der Aufnahmeplatte angebrachte Basisplatte und ein an einer Oberseite der Aufnahmeplatte angebrachtes Befestigungselement zur Aufnahme wenigstens eines Befestigungsmittels auf. In der Aufnahmeplatte sind für jeden Laststromstecker Aussparungen vorgesehen, die der Kontur des Laststromsteckers entsprechen.

An der Basisplatte können Einführschienen ausgebildet sein, über die Einschubelement in entsprechenden Halteelementen am Gehäuse der Niederspannungs-Schaltanlage eingeschoben und in diesen gehalten wird.

Die Ausbildung der Einführschiene derart, daß sie in Einsteckrichtung über die Aufnahmeplatte hinausragt, hat den Vorteil, daß somit die Kontaktstücke der Laststromstecker, die ebenfalls über die Aufnahmeplatte hinausragen, besser geschützt sind. Wird das fertig montierte Einschubelement abgestellt, so liegt es u.a. auf der Vorderkante der Einführschiene auf. Würden die Einführschienen nicht über die Aufnahmeplatte hinausragen, so würde das Einschubelement mit den Kontaktstücken der Laststromstecker aufliegen und diese könnten beschädigt werden.

Am äußeren linken und rechten Rand des Einschubelementes sind an den Einführschienen Einführkanten vorgesehen, damit das Einschubelement besser in entsprechende Haltemittel am Gehäuse der Niederspannungs-Schaltanlage eingeschoben und gehalten werden können.

In einer besonders bevorzugten Ausführungsform sind am Steckerträger zwei Einsteckplättchen angebracht. Diese Einsteckplättchen werden in schlitzartige Aussparungen an der Montageplatte eingesetzt, so daß der Steckerträger verschwenkbar und lösbar an der Montageplatte gehalten wird.

Vorteilhafterweise sind die Einsteckplättchen an der Basisplatte nach unten ragend angebracht und weisen an ihrer Unterkante stufenförmige Ausbildungen auf. Mit diesen stufenförmigen Ausbildungen wird das Einsteckplättchen in schlitzartige Aussparungen an der Montageplatte eingesteckt, die vorzugsweise in einer Knickkante eines lotrecht abgewinkelten Bereiches der Montageplatte angesiedelt sind. Diese schlitzartigen Aussparungen sind so ausgelegt, daß der am weitesten nach unten stehende Bereich des Einsteckplättchens lose hineinpaßt und daß die nächste Stufe des Einsteckplättchens auf dem abgewinkelten Bereich der Montageplatte aufliegt.

Hierdurch wird ein Auflager für den Steckerträger gebildet, so daß der Steckerträger ohne weitere Hilfsmittel an der Montageplatte hält.

Der Zusammenbau eines derartigen Einschubelementes ist denkbar einfach, denn der Steckerträger braucht lediglich mit seinen Einsteckplättchen in diese schlitzartigen Aussparungen eingesetzt werden und schon hält der Steckerträger an der Montageplatte. Hierbei ist die schlitzartige Aussparung so ausgestaltet, daß der Steckerträger um ca. 30 bis 90, vorzugsweise 60° zur Montageplatte abgewinkelt ist. Nun kann der Steckerträger in einfacher Weise so weit zur Montageplatte herangeschwenkt werden, daß die an der Oberseite der Aufnahmeplatte angebrachten Befestigungselemente den Steckerträger an der Montageplatte dauerhaft und verliersicher befestigen. In dieser Position ist die Aufnahmeplatte des Steckerträgers vorzugsweise parallel zur Montage-platte ausgerichtet.

In einer besonders bevorzugten Ausführungsform sind am Steckerträger, vorzugsweise am Einsteckplättchen, Zentrierstifte ausgebildet, die in entsprechende Zentrieröffnungen an der Montageplatte eingreifen, sobald der Steckerträger zur Montageplatte hingeschwenkt wird.

Hierdurch wird erreicht, daß der nur lose in die schlitzförmigen Aussparungen eingesteckte Steckerträger relativ zur Montageplatte exakt zentriert wird, so daß am Steckerträger angebrachte Befestigungsbohrungen mit entsprechenden Befestigungsbohrungen der Montageplatte fluchten, um Befestigungsmittel, beispielsweise Schrauben, Nieten, Rastverschlüsse, Schnappverbindungen oder dergleichen in einfacher Weise anbringen zu können.

Durch die Zentrierstifte und die dazugehörigen Zentrieröffnungen ist es möglich, die Fertigungstoleranzen sowohl der Montageplatte als auch des Steckerträgers herabzusetzen, so daß eine sehr viel kostengünstigere Fertigung möglich ist.

In einer vorteilhaften Ausführungsform sind an der Montageplatte abgewinkelte Stege vorgesehen, die beispielsweise Bohrungen zur Aufnahme von Befestigungsmitteln aufweisen. Diese Stege sind so an der Montageplatte angebracht, daß sie in vorteilhafter Weise mit den an der Aufnahmeplatte angebrachten Befestigungselementen zusammenwirken.

In einer besonders vorteilhaften Ausführungsform wird der Steckerträger über Schrauben an der Montageplatte befestigt. Hierbei weisen die an der Aufnahmeplatte angebrachten Befestigungselemente Bohrungen zur Aufnahme dieser Schrauben auf. Diese Bohrungen fluchten mit entsprechenden Bohrungen in den unmittelbar unter den Befestigungselementen angeordneten Stegen der Montageplatten, so daß die Befestigungsschraube in einfacher Weise angebracht werden kann.

In einer anderen, bevorzugten Ausführungsform ist an die Vorderseite der Montageplatte eine Aufbauplatte zur Aufnahme wenigstens eines Schaltgerätes anbringbar. Diese Aufbauplatte ist derart beabstandet von der Montageplatte angebracht, daß sich zwischen der Aufbauplatte und der Montageplatte ein Kabelführungskanal ausbildet. In diesem Kabelführungskanal können die vom Schaltgerät zu den Laststromsteckern führenden Kabel vorteilhaft geführt werden.

In einer vorteilhaften Ausführungsform wird der Kabelführungskanal dadurch gebildet, daß an der Aufbauplatte lotrecht abgewinkelte Abstandhalter angebracht sind. An diese Abstandhalter schließen sich Füßchen an, die in entsprechende Schlitze in der Montageplatte eingeführt werden und diese hintergreifen. An der Aufbauplatte sind zwei bis vier, vorzugsweise drei, derartige Füßchen angebracht. Nachdem die Aufbauplatte in die entsprechenden Schlitze in der Montageplatte eingesetzt ist, wird die Aufbauplatte um einen gewissen Weg zur Seite verschoben, damit die Füßchen die Montageplatte hintergreifen. In dieser Position wird die Aufbauplatte durch eine Schraube gesichert.

In einer vorteilhaften Ausführungsform ist der Steckerträger einstückig ausgeführt. Dies führt zu einer Senkung der Herstellungskosten des Steckerträgers.

Vorteilhafterweise sind sowohl die Montageplatte als auch der Steckerträger und die Aufbauplatte aus einem gebogenen, verzinkten Blech hergestellt, so daß eine kostengünstige Fertigung gewährleistet ist.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Die Erfindung ist in der Zeichnung dargestellt und wird anhand von Ausführungsbeispielen näher beschrieben. Im folgenden werden die einzelnen Figuren der Zeichnung kurz erläutert:
- Fig. 1: zeigt eine perspektivische Darstellung einer Niederspannungs-Schaltanlage mit einem erfindungsgemäßen Einschubelement;
- Fig. 2: zeigt eine perspektivische Explosionsdarstellung der Einzelteile eines Einschubelementes der Niederspannungs-Schaltanlage;
- Fig. 3: zeigt eine geschnitten dargestellte Seitenansicht des Einschubelementes gemäß Fig. 2 in geöffnetem Zustand, jedoch ohne die Laststromstecker;
- Fig. 4: zeigt eine geschnitten dargestellte Seitenansicht des Einschubelementes gemäß Fig. 2 in verschwenktem, bzw. geschlossenem Zustand, jedoch ohne die Laststromstecker;
- Fig. 4a: zeigt eine Ausschnittsvergrößerung eines Details des Einschubelementes gemäß Linie IVa in Fig. 4.

Die einzelnen Figuren der Zeichnung zeigen den erfindungsgemäßen Gegenstand teilweise stark schematisiert und sind nicht maßstäblich zu verstehen. Insbesondere sind einzelne, in den Figuren dargestellte Gegenstände teilweise überproportional vergrößert abgebildet, damit ihr Aufbau besser gezeigt werden kann.

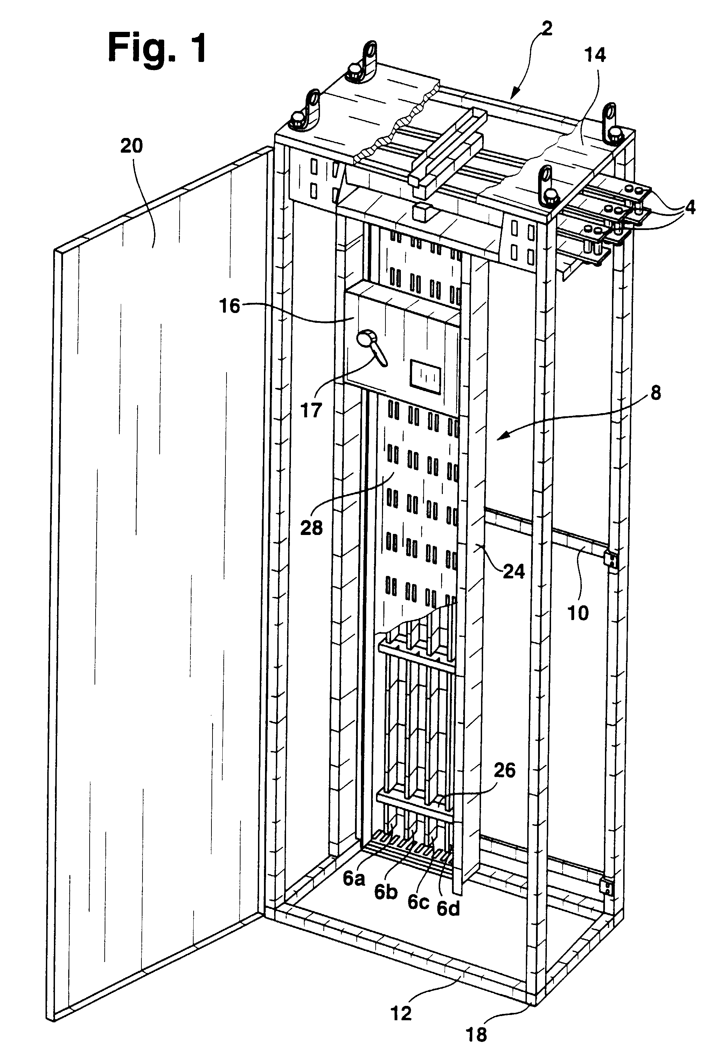

**Fig. 1** zeigt eine Ausführungsform einer Niederspannungs-Schaltanlage **2** mit oben angeordneten, horizontal verlaufenden Hauptsammelschienen **4**, an die vertikal verlaufende Feldsammel- oder Verteilschienen **6a - 6d** angeschlossen sind. Die Verteilschienen **6a - 6d** sind in einem Schienenkanalsystem **8** untergebracht, welches über drei Querträger **10** an einem Rahmen **12** eines Gehäuses **14** der Niederspannungs-Schaltanlage **2** befestigt ist.

An das Schienenkanalsystem **8** sind mehrere Einschubelemente **16** mit Schaltgeräten **17** angebracht, die jeder mit einem nicht dargestellten Stromabnehmer verbunden sind.

Das Gehäuse **14** der Niederspannungs-Schaltanlage **2** umfaßt einen Rahmen **12** mit Hohlprofilen, die an ihren Eckverbindungen **18** steckbar sind und nach erfolgter Montage dort mittels nicht dargestellter Befestigungsmittel zusammengehalten sind. An den Rahmen **12** ist eine Schranktür **20** drehbeweglich montiert, die das Gehäuse **14** verschließt. Die anderen Seiten des Gehäuses **14** werden durch lösbar am Rahmen **12** befestigte, jedoch nicht dargestellte Verkleidungen bedeckt.

Das Schienenkanalsystem **8** umfaßt drei an einer Rückwand eines Schienenkanals **24** befestigte Querträger **10**, sowie die Verteilschienen **6a - 6d**, Trägerelemente **26**, eine Schottwand **28** zur Abschirmung der Verteilschienen **6a - 6d** und durch das Schienenkanalsystem **8** hindurchsteckbare Befestigungsschrauben.

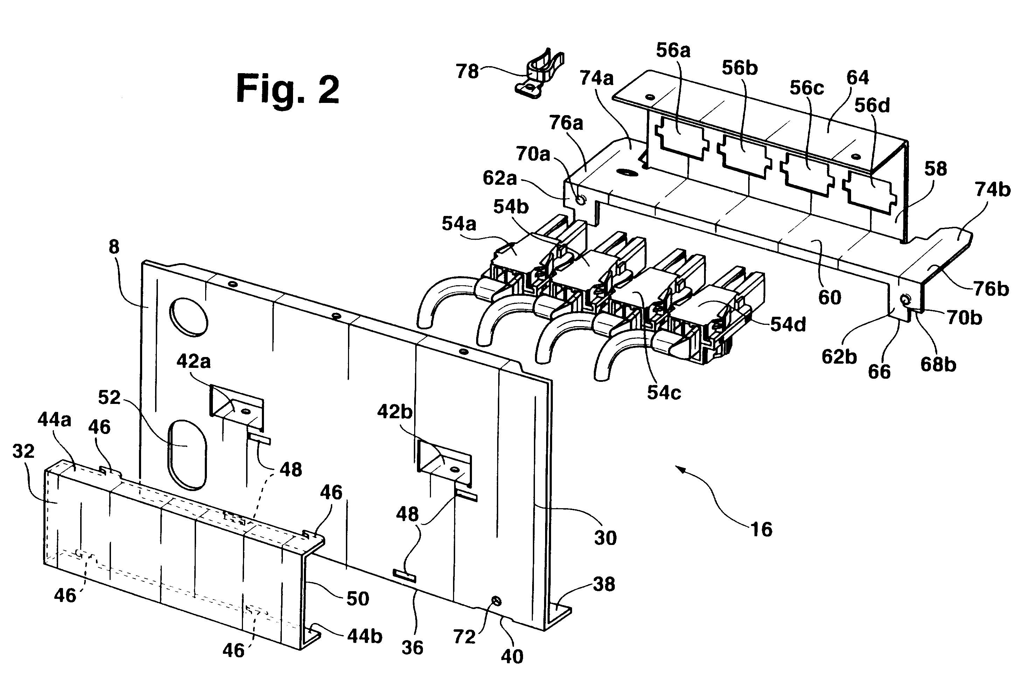

**Fig. 2** zeigt eine Ausführungsform eines erfindungsgemäßen Einschubelementes **16** mit einer parallel zur Rückwand des Gehäuses **24** angeordneten Montageplatte **30**, auf die eine Aufbauplatte **32** und ein Steckerträger **34** montiert werden können.

Die Montageplatte **30** ist aus verzinktem Blech hergestellt und ist entlang seiner oberen und unteren Längskante lotrecht abgewinkelt. In einer Knickkante **36** der unteren Abwinkelung **38** sind zwei schlitzartige Aussparungen **40** vorgesehen, in die der Steckerträger **34** eingesetzt wird. Etwa in der Mitte der Montageplatte sind zwei rechteckige Stege **42a** und **42b** aus der Montageplatte ausgebrochen und ebenfalls lotrecht abgewinkelt. Jeder dieser Stege **40a** und **40b** weist eine nicht dargestellte Bohrung zur Aufnahme jeweils einer Schraube auf, mit denen der Steckerträger **34** dauerhaft und verlustsicher an der Montageplatte **30** festgeschraubt wird.

Die ebenfalls aus einem verzinkten Blech gefertigte Aufbauplatte **32** weist an ihren Längskanten lotrecht abgewinkelte Abstandshalter **44a** und **44b**. An den Abstandshaltern **44a** und **44b** sind insgesamt drei oder vier Füßchen **46** ausgebildet.

Nachdem auf der Aufbauplatte **32** wenigstens ein, nicht dargestelltes Schaltgerät montiert worden ist, wird die Aufbauplatte **32** mit ihren Füßchen **46** in die Schlitze **48** in der Montageplatte **30** eingeführt und anschließend nach links geschoben, so daß die Füßchen **46** die Montageplatte **30** hintergreifen und einen zuverlässigen und spielfreien Sitz gewährleisten. Die Aufbauplatte **32** wird dann mit einer nicht dargestellten Schraube gegen Verrutschen gesichert.

Die Füßchen **46** sind so versetzt an den Abstandhaltern **44a** und **44b** angebracht, daß die Aufbauplatte **32** nur in einer bestimmten Position an der Montageplatte **30** anbringbar ist.

Die Abstandshalter **44a** und **44b** beabstanden die Aufbauplatte **32** derart von der Montageplatte **30,** daß sich in dem dazwischenliegenden Raum ein Kabelführungskanal **50** ausbildet, durch den die von den Schaltgeräten kommenden Kabel geleitet werden können. Nachdem die Kabel auf der linken Seite aus dem Kabelführungskanal **50** heraustreten, werden sie durch eine ovale Öffnung **52** in der Montageplatte **30** auf die Rückseite der Montageplatte **30** hin zu Laststromsteckern **54a - 54d** geführt.

Die Laststromstecker **54a - 54d** werden in dem Steckerträger **34** dadurch gehalten, daß sie mit ihrem Gehäuse in dem Gehäuse entsprechend ausgebildeten Aufnahmen **56a - 56d** in einer Aufnahmeplatte **58** des Steckerträgers **34** eingesetzt werden. Dabei sind die Aufnahmen **56a - 56d** so dimensioniert und ausgelegt, daß die Laststromstecker **54a - 54d** mit ihren Gehäusen paßgenau hineinpassen.

Darüber hinaus sind an den Laststromsteckern **54a - 54d** Anschläge und Rastmittel vorgesehen, damit die Laststromstecker **54a - 54d** in der jeweiligen Aufnahme **56a -** **56d** bis zu einer vorbestimmten Position eingeschoben werden und in dieser Position verrasten, damit ein nachträgliches Verrutschen oder unbeabsichtigtes des Laststromsteckers **54a - 54d** verhindert wird.

Der Steckerträger **34** ist aus einem einzigen, verzinkten Blech hergestellt und umfaßt die Aufnahmeplatte **58**, eine an die Unterseite der Aufnahmeplatte **58** rechtwinklig angeformte Basisplatte **60,** rechtwinklig an die Basisplatte **60** angeformte Einsteckplättchen **62a** und **62b,** sowie ein an einer Oberseite der Aufnahmeplatte **58** angeformtes Befestigungselement **64** zur Befestigung des Steckerträgers **34** an der Montageplatte **30.** Die Einsteckplättchen **62a** und **62b** sind an ihrem freien Ende, also an einer Unterseite **66** des Einsteckplättchens **62a** und **62b** stufenförmig ausgebildet. Dabei ist die Unterkante **66** so dimensioniert, daß sie gerade eben noch in die entsprechende schlitzartige Aussparung **40** in der Knickkante **36** der Abwickelung **38** der Montageplatte **30** hineinpaßt. Die sich an die Unterkante **66** anschließende Stufe **68** liegt dann bereits auf der Abwinckelung **38** auf und bildet so ein Auflager für den Steckerträger **34.**

An jedem Einsteckplättchen **62a** und **62b** ist ein in Richtung der Montageplatte **30** ragender Zentrierstift **70a, 70b** angeformt, der in entsprechende Zentrieröffnungen **72** eingeführt wird, sobald der Steckerträger **34** zur Montageplatte **30** hin verschwenkt wird.

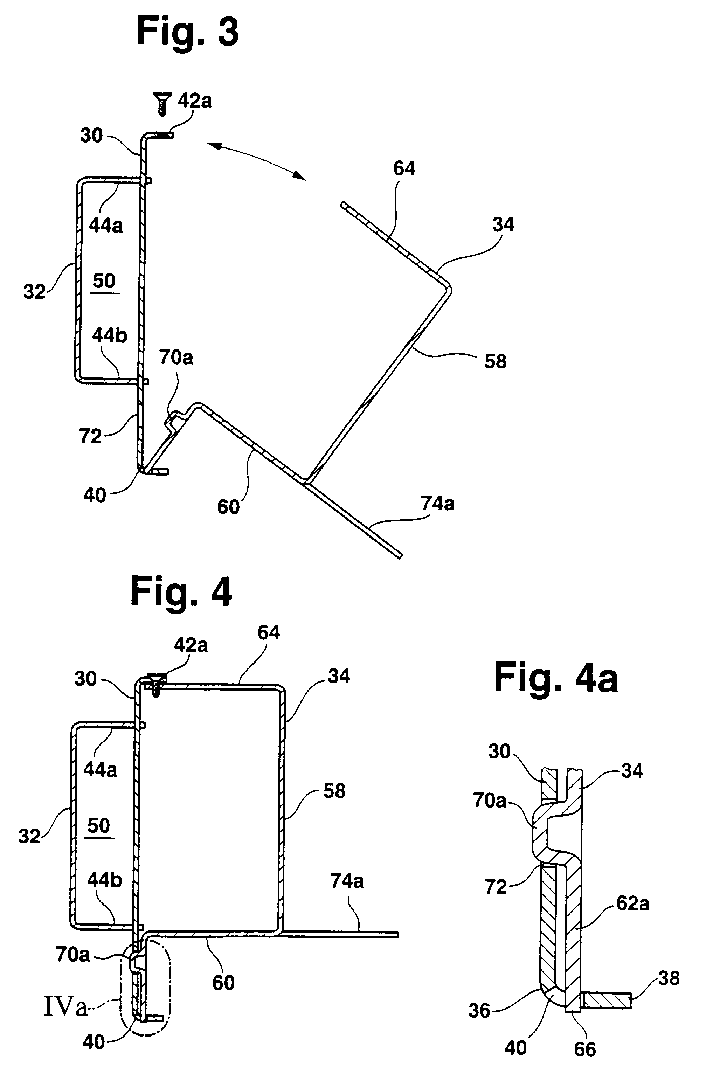

Die **Figuren 3, 4** und **4a** zeigen eine Seitenansicht des Einschubelementes **16** ohne die Laststromstecker **54a - 54d.**

In **Fig. 3** ist der Steckerträger **34** mit seinen Einsteckplättchen **62a** und **62b** in entsprechende schlitzartige Aussparungen **40** in der Montageplatte **30** eingesetzt und liegt mit der Stufe **68a** bzw. **68b** der Einsteckplättchen **62a** bzw. **62b** auf der Abwinkelung **38** der Montageplatte **30** auf.

Die schlitzartigen Aussparungen **40** und die Einsteckplättchen **62a** und **62b** sind so ausgebildet, daß die Aufnahmeplatte **58** des Steckerträgers **34** mit der Montageplatte **30** einen Winkel von etwa 30° bis 90°, vorzugsweise 60°, umschließt.

Nachdem alle Einzelteile am Einschubelement **16** montiert sind, bzw. alle notwendigen Arbeiten am Einschubelement **16** beendet sind, wird der gemäß **Fig. 3** in die Montageplatte **30** eingesteckte Steckerträger **34** derart verschwenkt, daß der durch die Montageplatte **30** und die Aufnahmeplatte **58** gebildete Winkel immer kleiner wird. Im Endzustand ist die Aufnahmeplatte **58** parallel zur Montageplatte **30,** wie dies in **Fig. 4** dargestellt ist.

In diesem Zustand liegen die an der Montageplatte **30** abgewinkelten Stege **42a** und **42b** in unmittelbarer Nähe des am Steckerträger **34** ange-formten Befestigungselementes **64.** Damit die in den Stegen **42a** und **42b** befindlichen Bohrungen zur Aufnahme einer Befestigungsschraube mit denen des Befestigungselementes **64** exakt fluchten, sind am Einsteckplättchen **62a** und **62b** Zentrierstifte **70a** und **70b** angeformt.

Beim Verschwenken des Steckerträgers **34** werden die Zentrierstifte **70a** und **70b** in entsprechende Zentrieröffnungen **72** in der Montageplatte **30** eingeführt und bewirken, daß sich der Steckerträger **34** relativ zur Montageplatte **30** präzise ausrichtet. Eine Ausrichtung ist unter anderem dadurch möglich, daß die Einsteckplättchen **62a** und **62b** mit einem gewissen Spiel in den schlitzartigen Aussparungen **40** eingesteckt sind, so daß sich der Steckerträger **34** in Richtung der Schwenkachse bewegen kann.

Zur Erleichterung der Einführung der Zentrierstifte **70a** und **70b** in die Zentrieröffnungen **72** können diese an ihrem freien Ende angefast oder konisch zulaufend ausgebildet sein.

Zur dauerhaften Befestigung des Steckerträgers **34** an der Montageplatte **30** werden in die in den Stegen **42a** und **42b** und in dem Befestigungselement **64** vorgesehenen Bohrungen Befestigungsschrauben eingedreht.

An der Basisplatte **60** des Steckerträgers **34** sind rechts und links jeweils Einführschienen **74a** und **74b** mit jeweils daran angeformten Einführ-kanten **76a** und **76b** ausgebildet. Mit diesen Einführkanten **76a** und **76b** kann das Einschubelement **60** in einfacher Weise in entsprechende Einführschlitze an dem Gehäuse der Niederspannungs-Schaltanlage eingeführt werden.

Die Einführschienen **74a** und **74b** stehen, in Einsteckrichtung, über die Aufnahmeplatte **58** hinaus und gewährleisten somit einen gewissen Schutz für die ebenfalls über die Aufnahmeplatte **58** hinausragenden Kontaktstücke der Laststromstecker **54a - 54d.** Dabei ist die Länge der Einführschienen **74a** und **74b** so dimensioniert, daß das Einschubelement **16** im vollständig montierten Zustand einerseits auf den vorderen Kanten der Einführschienen **74a** und **74b** und andererseits auf der Abwinkelung **38** der Montageplatte **30** aufliegt, wenn man das Einschubelement **16** auf eine ebene Unterlage abstellt. Hierdurch wird gewährleistet, daß nicht die Kontaktstücke der Laststromstecker **54a - 54d** als Auflage dienen und diese somit vor unbeabsichtigten Beschädigungen bei der Montage und/oder Reparatur geschützt werden.

An die Einführschiene **74a** ist ein PE-Stecker **78** zur Erdung des Einschubelementes **16** angebracht.

## Patentansprüche

1. Niederspannungs-Schaltanlage zur Abgabe und/oder Verteilung elektrischer Energie, mit in einem schrankförmigen Gehäuse (14) angeordneten Stromsammelschienen, an die mindestens ein mit wenigstens einem auf einem herausnehmbaren Einschubelement (16) angeordneten Schaltgerät (17) versehener Stromabnehmer angeschlossen ist, wobei die Stromsammelschienen in einem Schienenkanalsystem (8) angeordnete Verteilschienen (6a - 6d) aufweisen, deren elektrische Verbindung zu den auf einem Einschubelement (16) befindlichen Schaltgeräten (17) steckbar ist, und wobei das Einschubelement (16) eine parallel zur Rückwand des schrankförmigen Gehäuses (14) angeordnete Montageplatte (30) aufweist, an die ein Steckerträger (34) zur Aufnahme von Laststromsteckern (54a - 54d) angebracht ist, **dadurch gekennzeichnet,** daß der Steckerträger (34) verschwenkbar an der Montageplatte (30) gelagert ist.

2. Niederspannungs-Schaltanlage nach Anspruch 1, dadurch gekennzeichnet, daß der Steckerträger (34) um eine horizontale Achse verschwenkbar ist.

3. Niederspannungs-Schaltanlage nach wenigstens einem der vorhergehenden Ansprüche, dadurch gekennzeichnet, daß der Steckerträger (34) lösbar an der Montageplatte (30) gelagert ist.

4. Niederspannungs-Schaltanlage nach wenigstens einem der vorhergehenden Ansprüche, dadurch gekennzeichnet, daß der Steckerträger (34) durch ein Befestigungsmittel, insbesondere eine Schraube, eine Niete, einen Rastverschluß, eine Schnappverbindung oder dergleichen, dauerhaft und verliersicher an der Montageplatte (30) befestigbar ist.

5. Niederspannungs-Schaltanlage nach wenigstens einem der vorhergehenden Ansprüche, dadurch gekennzeichnet, daß der Steckerträger (34) eine Aufnahmeplatte (58) zur Aufnahme einer Anzahl von Laststromsteckern (54a - 54d), eine an einer Unterseite der Aufnahmeplatte (58) angebrachte Basisplatte (60) und ein an einer Oberseite der Aufnahmeplatte (58) angebrachtes Befestigungselement (64) zur Aufnahme wenigstens eines Befestigungsmittels aufweist.

6. Niederspannungs-Schaltanlage nach Anspruch 5, dadurch gekennzeichnet, daß an der Basisplatte (60) des Steckerträgers (34) Einführschienen (74a, 74b) ausgebildet sind.

7. Niederspannungs-Schaltanlage nach Anspruch 6, dadurch gekennzeichnet, daß wenigstens eine Einführschiene (74a, 74b) über die Aufnahmeplatte (58) hinausragt.

8. Niederspannungs-Schaltanlage nach wenigstens einem der Ansprüche 6 bis 7, dadurch gekennzeichnet, daß an der Einführschiene (74a, 74b) eine Einführkante (76a, 76b) vorgesehen ist.

9. Niederspannungs-Schaltanlage nach wenigstens einem der vorhergehenden Ansprüche, dadurch gekennzeichnet, daß am Steckerträger (34) zwei Einsteckplättchen (62a, 62b) angebracht sind, welche zur verschwenkbaren Lagerung des Steckerträgers (34) an der Montageplatte (30) in entsprechende schlitzartige Aussparungen (40) in der Montageplatte (30) einsetzbar sind.

10. Niederspannungs-Schaltanlage nach Anspruch 9, dadurch gekennzeichnet, daß die schlitzartigen Aussparungen (40) in einer Knickkante (36) eines lotrecht abgewinkelten Bereichs der Montageplatte (30) angesiedelt sind.

11. Niederspannungs-Schaltanlage nach Anspruch 9, dadurch gekennzeichnet, daß die Einsteckplättchen (62a, 62b) an der Basisplatte (60) des Steckerträgers (34) nach unten ragend angebracht sind und an ihrer Unterseite (66) stufenförmig ausgebildet sind.

12. Niederspannungs-Schaltanlage nach wenigstens einem der vorhergehenden Ansprüche, dadurch gekennzeichnet, daß der Steckerträger (34) wenigstens einen Zentrierstift (70a, 70b) aufweist, der in eine entsprechende Zentrieröffnung (72) in der Montageplatte (30) eingreift, sobald der Steckerträger (34) zur Montageplatte (30) schwenkt.

13. Niederspannungs-Schaltanlage nach Anspruch 12, dadurch gekennzeichnet, daß der Zentrierstift (70a, 70b) an dem Einsteckplättchen (62a, 62b) angebracht ist.

14. Niederspannungs-Schaltanlage nach wenigstens einem der Ansprüche 4 bis 13, dadurch gekennzeichnet, daß die Montageplatte (30) abgewinkelte Stege (42a, 42b) zur Aufnahme wenigstens eines Befestigungsmittels zur Befestigung des Steckerträgers (34) aufweist.

15. Niederspannungs-Schaltanlage nach wenigstens einem der vorhergehenden Ansprüche, dadurch gekennzeichnet, daß an der Montageplatte (30) eine Aufbauplatte (32) zur Aufnahme wenigstens eines Schaltgerätes (17) anbringbar ist.

16. Niederspannungs-Schaltanlage nach Anspruch 15, dadurch gekennzeichnet, daß zwischen der Aufbauplatte (32) und der Montageplatte (30) ein Kabelführungskanal (50) ausgebildet ist.

17. Niederspannungs-Schaltanlage nach wenigstens einem der Ansprüche 15 bis 16, dadurch gekennzeichnet, daß an der Aufbauplatte (32) lotrecht abgewinkelte Abstandshalter (44a, 44b) angebracht sind.

18. Niederspannungs-Schaltanlage nach Anspruch 17, dadurch gekennzeichnet, daß an den Abstandshaltern (44a, 44b) zwei, drei oder vier in entsprechende Schlitze (48) in der Montageplatte (30) einzuführende, die Montageplatte (30) hintergreifende Füßchen (46) angeformt sind.

19. Niederspannungs-Schaltanlage nach wenigstens einem der vorhergehenden Ansprüche, dadurch gekennzeichnet, daß der Steckerträger (34) einstückig ausgeführt ist.

20. Niederspannungs-Schaltanlage nach wenigstens einem der vorhergehenden Ansprüche, dadurch gekennzeichnet, daß die Montageplatte (30) und/oder der Steckerträger (34) und/oder die Aufbauplatte (32) aus einem entsprechend gebogenem, verzinkten Blech hergestellt sind.

## Claims

1. Low-voltage switchgear assembly for the delivery and/or distribution of electrical energy with collecting bus bars arranged in a cabinet-shaped casing (14), and connected to at least one current consumer provided with at least one switching device (17) located on a removable slide-in element (16), while the collecting bus bars present distribution bus bars (6a - 6d) arranged in a bar channel system (8), and have a pluggable electrical connection to the switching devices (17) located on a slide-in element (16), and while the slide-in element (16) presents a mounting plate (30) which is located in parallel with regard to the rear wall of the cabinet-shaped casing (14), and to which a plug holder (34) is mounted for the reception of load current plugs (54a - 54d), **characterized in that** the plug holder (34) is supported in a swivelling way on the mounting plate (30).

2. Low-voltage switchgear assembly as claimed in claim 1, **characterized in that** the plug holder (34) swivels around a horizontal axis.

3. Low-voltage switchgear assembly as claimed in at least one of the above-mentioned claims, **characterized in that** the plug holder (34) is supported in a detachable way on the mounting plate (30).

4. Low-voltage switchgear assembly as claimed in at least one of the above-mentioned claims, **characterized in that** the plug holder (34) can be fixed in a lasting and captive way to the mounting plate (30) with the help of a fixing means, and especially by means of a bolt, a rivet, a locking connection, a snap connection, or a similar device.

5. Low-voltage switchgear assembly as claimed in at least one of the above-mentioned claims, **characterized in that** the plug holder (34) presents a receiving plate (58) for the reception of a number of load current plugs (54a - 54d), a base plate (60) mounted at a lower side of the receiving plate (58), and a fixing element (64) mounted on an upper side of the receiving plate (58) for receiving at least one means of fixing.

6. Low-voltage switchgear assembly as claimed in claim 5, **characterized in that** insertion rails (74a, 74b) are formed on the base plate (60) of the plug holder (34).

7. Low-voltage switchgear assembly as claimed in claim 6, **characterized in that** at least one insertion rail (74a, 74b) projects beyond the base plate (58).

8. Low-voltage switchgear assembly as claimed at least in one claim 6 through 7, **characterized in that** an insertion edge (76a, 76b) is provided at the insertion rail (74a, 74b).

9. Low-voltage switchgear assembly as claimed in at least one of the above-mentioned claims, **characterized in that** two small insertable plates (62a, 62b) are attached to the plug holder (34), and can be inserted in corresponding slot-like recesses (40) in the mounting plate (30) for the swivelling support of the plug holder (34) at the mounting plate (30).

10. Low-voltage switchgear assembly as claimed in claim 9, **characterized in that** the slot-like recesses (40) are located in a bent edge (36) of a section of the mounting plate (30) which has been bent at a vertical angle.

11. Low-voltage switchgear assembly as claimed in claim 9, **characterized in that** the small insertable plates (62a, 62b) are mounted pointing downward at the base plate (60) of the plug support (34), and that they are formed like steps at their lower side (66).

12. Low-voltage switchgear assembly as claimed in at least one of the above-mentioned claims, **characterized in that** the plug support (34) presents at least one centering pin (70a, 70b) which engages in a corresponding centering opening (72) in the mounting plate (30) as soon as the plug support (34) swivels to the mounting plate (30).

13. Low-voltage switchgear assembly as claimed in claim 12, **characterized in that** the centering pin (70a, 70b) is mounted on the small insertable plate (62a, 62b).

14. Low-voltage switchgear assembly as claimed at least in one claim 4 through 13, **characterized in that** the mounting plate (30) presents webs (42a, 42b) which are bent at an angle for the reception of at least one fixing means for fixing the plug support (34).

15. Low-voltage switchgear assembly as claimed in at least one of the above-mentioned claims, **characterized in that** an assembly plate (32) for the reception of at least one switching device (17) may be mounted on the mounting plate (30).

16. Low-voltage switchgear assembly as claimed in claim 15, **characterized in that** a cable guidance channel (50) is formed between the assembly plate (32) and the mounting plate (30).

17. Low-voltage switchgear assembly as claimed at least in one claim 15 through 16, **characterized in that** vertically bent spacers (44a, 44b) are mounted to the assembly plate (32).

18. Low-voltage switchgear assembly as claimed in claim 17, **characterized in that** two, three, or four small feet (46) are formed integral with the spacers (44a, 44b), that they shall be inserted in corresponding slots (48) in the mounting plate (30), and engage behind the mounting plate (30).

19. Low-voltage switchgear assembly as claimed in at least one of the above-mentioned claims, **characterized in that** the plug support (34) is designed as a single piece.

20. Low-voltage switchgear assembly as claimed in at least one of the above-mentioned claims, **characterized in that** the mounting plate (30) and/or the plug support (34) and/or the assembly plate (32) are made of galvanized sheet metal which has been bent correspondingly.

## Revendications

1. Installation de distribution électrique à basse tension pour la fourniture et/ou la distribution de courant électrique, à barres collectrices disposées dans un boîtier (14) en forme d'armoire, auxquelles est relié au moins un balai conducteur pourvu d'au moins un appareil de coupure (17) disposé sur un élément embrochable (16) amovible, où les barres collectrices présentent, disposées dans un bloc de canalisation (8), des barres de distribution (6a - 6d) dont le raccordement électrique aux appareils de coupure (17) disposés sur un élément embrochable (16) est enfichable, et où l'élément embrochable (16) présente une plaque de montage (30) disposée parallèlement à la paroi arrière du boîtier (14) en forme d'armoire, sur laquelle est appliqué un porte-fiches (34) pour le logement de fiches de courant sous charge (54a - 54d), **caractérisée en ce que** le porte-fiches (34) présente une fixation mobile sur la plaque de montage (30).

2. Installation de distribution électrique à basse tension selon revendication 1, **caractérisée en ce que** le porte-fiches (34) peut basculer par rapport à un axe horizontal.

3. Installation de distribution électrique à basse tension selon l'une des revendications précédentes au moins, **caractérisée en ce que** le porte-fiches (34) est fixé de manière à pouvoir être détaché de la plaque de montage (30).

4. Installation de distribution électrique à basse tension selon l'une des revendications précédentes au moins, **caractérisée en ce que** le porte-fiches (34) est fixable durablement et de manière imperdable sur la plaque de montage (34) au moyen d'une pièce de fixation, notamment vis, rivet, fermeture à enclenchement, pièce d'assemblage à déclic ou similaire (30).

5. Installation de distribution électrique à basse tension selon l'une des revendications précédentes au moins, **caractérisée en ce que** le porte-fiches (34) présente une plaque (58) pour le logement d'un certain nombre de fiches de courant sous charge (54a -54d), une plaque de base (60) appliquée sur le côté inférieur de la plaque de logement (58) et un élément de fixation (64) appliqué sur un côté supérieur de la plaque de logement (58), pour le logement d'une pièce de fixation au moins.

6. Installation de distribution électrique à basse tension selon revendication 5, **caractérisée en ce que** des rails d'insertion (74a, 74b) sont formés sur la plaque de base (60) du porte-fiches (34).

7. Installation de distribution électrique à basse tension selon revendication 6, **caractérisée en ce qu'**un rail d'insertion (74a, 74b) au moins dépasse de la plaque de logement (58).

8. Installation de distribution électrique à basse tension selon l'une au moins des revendications 6 à 7, **caractérisée en ce qu'**un bord de guidage (76a, 76b) est prévu sur chaque rail d'insertion (74a, 74b).

9. Installation de distribution électrique à basse tension selon l'une des revendications précédentes au moins, **caractérisée en ce que** deux plaquettes d'embrochement (62a, 62b) sont appliquées sur le porte-fiches (34), lesquelles sont insérables dans des orifices en fente (40) correspondants de la plaque de montage (30) pour le logement du porte-fiches (34) par basculement sur la plaque de montage (30).

10. Installation de distribution électrique à basse tension selon revendication 9, **caractérisée en ce que** les orifices en fente (40) sont aménagés dans la pliure (36) d'une partie en équerre de la plaque de montage (30).

11. Installation de distribution électrique à basse tension selon revendication 9, **caractérisée en ce que** les plaquettes d'embrochement (62a, 62b) sont appliquées en saillant vers le bas sur la plaque de base (60) du porte-fiches (34) et qu'elles sont formées en gradins sur leur côté inférieur (66).

12. Installation de distribution électrique à basse tension selon l'une des revendications précédentes au moins, **caractérisée en ce que** le porte-fiches (34) présente au moins une cheville de centrage (70a, 70b), laquelle s'engage dans un orifice de centrage (72) correspondant de la plaque de montage (30) dès que le porte-fiches (34) bascule vers la plaque de montage (30).

13. Installation de distribution électrique à basse tension selon revendication 12, **caractérisée en ce que** la cheville de montage (70a, 70b) est appliquée sur la plaquette d'embrochement (62a, 62b).

14. Installation de distribution électrique à basse tension selon l'une au moins des revendications 4 à 13, **caractérisée en ce que** la plaque de montage (30) présente des méplats (42a, 42b) en équerre pour le logement d'une pièce de fixation au moins, pour la fixation du porte-fiches (34).

15. Installation de distribution électrique à basse tension selon l'une des revendications précédentes au moins, **caractérisée en ce qu'**une plaque à rapporter (32) peut être appliquée sur la plaque de montage (30) pour le logement d'un appareil de coupure (17) au moins.

16. Installation de distribution électrique à basse tension selon revendication 15, **caractérisée en ce qu'**une canalisation de câble (50) est formée entre la plaque à rapporter (32) et la plaque de montage (30).

17. Installation de distribution électrique à basse tension selon l'une au moins des revendications 15 à 16, **caractérisée en ce que** des barrettes d'écartement (44a, 44b) sont formées par pliage en équerre sur la plaque à rapporter (32).

18. Installation de distribution électrique à basse tension selon revendication 17, **caractérisée en ce que** deux, trois ou quatre languettes (46) s'engageant dans des fentes (48) correspondantes de la plaque de montage (30), sont formées sur les barrettes d'écartement (44a, 44b), lesdites languettes bloquant la plaque à l'arrière.

19. Installation de distribution électrique à basse tension selon l'une des revendications précédentes au moins, **caractérisée en ce que** le porte-fiches (34) est exécuté en une seule pièce.

20. Installation de distribution électrique à basse tension selon l'une des revendications précédentes au moins, **caractérisée en ce que** la plaque de montage (30) e/ou le porte-fiches (34) et/ou la plaque à rapporter (32) sont réalisés à partir d'une tôle galvanisée et pliée en conséquence.
